# EUROPÄISCHE PATENTANMELDUNG

(11) **EP 3 851 712 A1**
(43) Veröffentlichungstag der Anmeldung: **21.07.2021**
(21) Anmeldenummer: 21152000.2
(22) Anmeldetag: 18.01.2021
(51) Int. Cl.: F16K 7/12, F16K 37/00

(54) **VERFAHREN ZUR UEBERWACHUNG VON WARTUNGSARBEITEN AN EINEM MEMBRANVENTIL**

(30) Priorität: 20.01.2020 DE 102020101179
(71) Anmelder: SISTO Armaturen S.A., 6468 Echternach (LU)
(72) Erfinder: SCHAAL, Andreas, 6468 Echternach (LU); HACKENBERGER, Bernd, 6468 Echternach (LU)
(74) Vertreter: Busch, Tobias

(57) **Zusammenfassung**

Die Erfindung betrifft ein Verfahren zur Überwachung von Wartungsarbeiten an einem Membranventil (1), wobei eine zumindest eine Sensoreinheit (15a,15b) aufweisende Sensorvorrichtung (15) Betriebsinformationen des Membranventils (1) erfasst und diese an eine Auswerteeinheit (16) übermittelt, wobei die Auswerteeinheit (16) einzelne Wartungsschritte durch einen Abgleich der Betriebsinformationen mit charakteristischen Betriebsinformationen ermittelt und wobei die charakteristischen Betriebsinformationen in einer Speichereinheit (20) der Auswerteeinheit (16) hinterlegt sind.

## Beschreibung

Die vorliegende Erfindung betrifft ein Verfahren zur Überwachung von Wartungsarbeiten an einem Membranventil.

Membranventile werden in vielfältigsten Anwendungsbereichen dazu genutzt, um den Volumenstrom von Gasen oder Flüssigkeiten zu steuern oder zu regeln. Hierbei ist die Besonderheit, dass Membranventile eine innenliegende Membran aufweisen, über die das Ventil abgedichtet wird bzw. über die der effektive Strömungsquerschnitt gezielt eingestellt werden kann. Die Membran wird hierzu über ein Druckstück über eine vergleichsweise kleine Strecke bewegt. Der Dichtsteg kommt hierbei der Membran entgegen. Das Betriebsmedium berührt lediglich die Membranoberfläche. Alle mechanischen Teile liegen außerhalb des medienbenetzten Raumes.

Aufgrund dieses Prinzips weisen Membranventile nur sehr geringe Toträume auf, in denen bzw. an denen sich Bestandteile des Betriebsmediums ablagern können. Somit eigenen sich derartige Ventile insbesondere für hochviskose oder hochhaftfähige Flüssigkeiten.

Da die Membran während der Betriebszeit je nach Einsatzbedingungen hohen äußeren Beanspruchungen und damit Verschleißerscheinungen unterliegt, ist es erforderlich, dass diese von Zeit zu Zeit ausgetauscht werden muss. Insbesondere in produktionskritischen Industrien mit hohen Anforderungen an die Anlagenverfügbarkeit wie bspw. der Pharmaindustrie wird hierbei ein großer Wert auf die korrekte Durchführung der Wartungsmaßnahmen gelegt.

Der vorliegenden Erfindung liegt daher die Aufgabe zugrunde, die Zuverlässigkeit und Genauigkeit der Wartungsarbeiten zu verbessern und insbesondere eine Überwachung der Wartungsarbeiten zu ermöglichen.

Diese Aufgabe wird gelöst durch ein Verfahren gemäß Anspruch 1 sowie eine Membranventilanordnung gemäß Anspruch 9.

Demnach erfasst eine zumindest eine Sensoreinheit aufweisende Sensorvorrichtung Betriebsinformationen des Membranventils und übermittelt diese an eine Auswerteeinheit, wobei die Auswerteeinheit einzelne Wartungsschritte durch einen Abgleich der Betriebsinformationen mit charakteristischen Betriebsinformationen ermittelt, wobei die charakteristischen Betriebsinformationen in einer Speichereinheit der Auswerteeinheit hinterlegten sind. Die Wartungsschritte können demnach anhand bestimmter charakteristischer Betriebsinformationen bestimmt werden, die sich anhand von Sensoren bestimmen lassen.

Mithilfe der Erfindung kann somit erkannt werden, ob bestimmte Wartungsmaßnahmen zum geplanten Zeitpunkt tatsächlich durchgeführt wurden und/oder ob die neue Membran korrekt montiert wurde. Ferner ist auch eine interaktive Wartung möglich, bei der dem Wartungspersonal basierend auf den Sensorwerten und erkannten Wartungsschritten eine Anleitung zur korrekten Durchführung gegeben wird.

Gemäß einer üblichen Ausgestaltung der Erfindung weist das Membranventil eine Membran auf, deren Stellposition über eine Sperrvorrichtung verändert werden kann, wobei eine erste Sensoreinheit dazu vorgesehen sein kann, die Stellposition und/oder die Bewegung der Membran als Betriebsinformation zu erfassen. Die Stellposition ist eine wichtige Betriebsinformation, da einzelne Wartungsschritte z.B. beim Austausch der Membran nur entweder in einer geschlossenen oder einer geöffneten Stellung des Membranventils durchgeführt werden können.

Gemäß einer ersten Alternative kann zur Erfassung der Stellposition und/oder der Bewegung die erste Sensoreinheit ein Gyroskop und ein Magnetometer aufweisen, die die Stellposition und die Bewegung eines Handradantriebes über eine Erfassung der Winkelstellung ermitteln.

Gyroskope werden üblicherweise auch als Kreiselinstrumente bezeichnet und eignen sich dazu, um Drehgeschwindigkeiten bzw. Drehraten um eine bestimmte Rotationsachse zu bestimmen. Bevorzugt kommt vorliegend ein mehrachsiges, insbesondere ein dreiachsiges Gyroskop zur Anwendung, welches somit Drehungen um alle drei Raumachsen bestimmen kann. Neben der Drehgeschwindigkeit bzw. der Drehrate kann auch die Drehrichtung mit Hilfe des Gyroskops erfasst werden.

Mit Hilfe des Magnetometers kann die Richtung sowie die Stärke des Erdmagnetfelds ermittelt und unter anderem die Lage der Sensorvorrichtung relativ zur Erde festgestellt werden.

Eine solche Sensorvorrichtung wird daher im Rahmen der Erfindung bevorzugt in Kombination mit einer Sperrvorrichtung eingesetzt, welche über ein Handrad das Membranventil von einer geöffneten in eine geschlossene Stellposition überführen kann. Die Sensorvorrichtung kann dann bevorzugt über ein Befestigungsblech auf dem Handrad befestigt werden. Durch das Gyroskop kann die Drehung des Handrades erfasst werden, wobei das Magnetometer die genaue Ausrichtung des Handrades berücksichtigt.

Gemäß einer zweiten Alternative kann die Betätigung auch über einen Pneumatikantrieb betrieben werden. Die erste Sensoreinheit weist dann vorzugsweise zumindest einen Drucksensor und/oder zumindest einen Wegsensor auf. Mit Hilfe eines Drucksensors kann die Stellposition über eine Erfassung des Steuerdrucks der Sperrvorrichtung ermittelt werden. Alternativ oder ergänzend können zur Erfassung auch Endlagenschalter eingesetzt werden. Zugleich können aber auch bei einem Pneumatikantrieb zusätzlich eine Kombination aus Gyroskop und Magnetometer in der ersten Sensoreinheit vorgesehen sein, die dann keine Erfassung der Stellposition, sondern nur eine Erfassung der Lage des Ventils ermitteln.

Bevorzugt erfasst eine zweite Sensoreinheit Schwingungen des Membranventils als Betriebsinformation, wobei die zweite Sensoreinheit als Mikrofon oder als Beschleunigungssensor ausgebildet ist. Mit Hilfe der zweiten Sensoreinheit kann beispielsweise das Lösen von Schrauben oder Entfernen einzelner Bauteile detektiert werden. Durch einen Abgleich mit der ersten Sensoreinheit kann beispielsweise ausgeschlossen werden, dass die Schwingung auf einer Veränderung der Stellposition basiert.

Auch beim Anziehen und/oder Nachziehen von Schrauben entstehen charakteristische Schwingungen, die z.B. mit dem Beschleunigungssensor erkannt werden können. Dadurch kann ein Nachziehen der Schrauben überprüft werden. Mit der Betriebsinformation, wie oft und in welchen Abständen nachgezogen wird, können auch Rückschlüsse auf die Temperatur gezogen werden.

Da verschiedene Wartungshandlungen eine identische oder zumindest ähnliche Betriebsinformation hervorrufen, können diese allein aufgrund der detektierten Betriebsinformation nicht deutlich voneinander unterschieden werden. Aus diesem Grunde sind charakteristische Betriebsinformationen bevorzugt in Form eines Ablaufplans in der Speichereinheit hinterlegt und einzelne Wartungsschritte werden sowohl nach Art als auch nach der Reihenfolge der von der Sensorvorrichtung detektierten Betriebsinformationen in der Auswerteeinheit ermittelt.

Gemäß einer bevorzugten Weiterbildung der Erfindung erzeugt die Auswerteeinheit ein Ausgabesignal und übermittelt diese an eine Ausgabeeinheit, wobei die Ausgabeeinheit die Betriebsinformationen in Form eines Ausgabesignals ausgibt. Die Ausgabeeinheit kann beispielsweise ein Bildschirm sein, welcher z.B. unmittelbar an der Sensorvorrichtung angeordnet ist. Hierzu bilden die Sensorvorrichtung, die Auswerteeinheit und die Ausgabeeinheit bevorzugt eine bauliche Einheit, welche in einem Gehäuse angeordnet ist. Der Bildschirm kann dann in einem Ausschnitt des Gehäuses eingebracht sein.

Alternativ kann die Ausgabeeinheit auch ein stationärer Computer, ein Laptop, ein Tablett und/oder ein Smartphone sein. Das Ausgabesignal kann ausgegeben werden. Darüber hinaus sind auch haptische Ausgabesignale möglich z.B. über den Haptikmotor bzw. Vibrationsmotor eines Tablets oder eines Smartphones. Neben den Betriebsinformationen kann dem Betreiber eine Wartungsempfehlung angezeigt werden, z.B. wenn das Ventil innerhalb festgelegter Zeiträume nicht oder nur selten nachgezogen wird.

Basierend auf der beschriebenen Erkennung von Wartungsmaßnahmen können dem Wartungspersonal auch digitale Service-Dienstleistungen angeboten werden. Zum Beispiel ermöglicht es die Erkennung der einzelnen Ablaufschritte eines Membranwechsels durch die Sensorik, dem Servicepersonal eine interaktive, wartungsbegleitende Anleitung mithilfe des Tablets, des Smartphones oder einer Augmented- bzw. Virtual-Reality-Brille bereitzustellen. Zu jedem Zeitpunkt zeigt dann eine App entsprechend die nötigen Ablaufschritte zur Durchführung der Wartungsmaßnahme an. Zusätzlich können Gefahrenhinweise angezeigt werden. Informationen können in Text- oder Bildform oder als Animation dargestellt werden. Weiterhin ist der Zugriff auf wartungsunterstützende Dokumente wie Betriebsanleitung, technische Zeichnungen, Ersatzteilliste oder Bestellformulare möglich. Bei Nutzung einer Augmented- bzw. Virtual-Reality-Brille können die beschriebenen Informationen, insbesondere grafische Animationen, virtuell in das reale Bild integriert werden.

Bevorzugt stehen die Sensorvorrichtung mit der Auswerteeinheit und/oder die Sensorvorrichtung mit der Ausgabeeinheit über jeweils eine drahtlose Signalverbindung miteinander in Verbindung. Alternativ kann aber auch zwischen den einzelnen Einheiten eine Signalleitung vorgesehen sein, über die die Signale übermittelt werden.

Für die Energieversorgung des Messsystems aus der Sensorvorrichtung, der Auswerteeinheit und bevorzugt der Ausgabeeinheit kann ferner eine Energieversorgungseinheit vorgesehen sein. Diese kann entweder einen batteriegetriebenen Energiespeicher z.B. einen Akku aufweisen oder an das Stromnetz angeschlossen sein oder Energie aus der Umgebung ernten, z.B. durch sogenanntes Energy Harvesting. Mit Energy Harvesting bezeichnet man die Gewinnung kleiner Mengen von elektrischer Energie aus Quellen wie Umgebungstemperatur, Vibrationen oder Luftströmungen für mobile Geräte mit geringer Leistung.

Ein weiterer Aspekt der Erfindung besteht darin, dass durch die Erkennung der Wartungsschritte auch die korrekte Durchführung der Wartung in einem Wartungssystem des Anlagenbetreibers dokumentiert werden kann. Dies ist insbesondere deshalb relevant, da in vielerlei Bereich eine diesbezügliche Dokumentationspflicht besteht. Es können Informationen zum Datum, zum Wartungspersonal, zum Zustand der ausgebauten Membrane und sonstige Informationen in einer separaten Wartungsplattform hinterlegt werden.

Gegenstand der Erfindung ist auch eine Membranventilanordnung nach Anspruch 9 mit zumindest einem Membranventil und einem Messsystem, wobei das Messsystem zumindest eine Sensorvorrichtung und eine Auswerteeinheit aufweist und wobei das Messsystem zur Durchführung des erfindungsgemäßen Verfahrens ausgebildet und eingerichtet ist.

Alle weiteren gegenständlichen Merkmale, die zuvor im Zusammenhang mit dem erfindungsgemäßen Verfahren offenbart wurden, gelten selbstverständlich auch für die Membranventilanordnung.

Bei einer Variante weist die erste Sensoreinheit ein Gyroskop und ein Magnetometer zur Bestimmung der räumlichen Lage und/oder der Bewegung der Sperrvorrichtung auf.

Bei einer anderen Variante kann die erste Sensoreinheit anstelle eines Gyroskops und eines Magnetometers einen Beschleunigungssensor aufweisen. Bei dieser Variante kann der Beschleunigungssensor nicht nur zur Ermittlung der Stellposition und/oder die Bewegung einsetzt werden, sondern auch der Erfassung von Schwingungen gemäß der Aufgabe der zweiten Sensoreinheit.

Im Folgenden wird die Erfindung anhand eine Ausführungsbeispiels näher erläutert. Es zeigen:
- Fig. 1: eine erfindungsgemäße Membranventilanordnung
- Fig. 2: ein erfindungsgemäßes Verfahren zur Überwachung des Membranventils mit der Membranventilanordnung gemäß Fig. 1

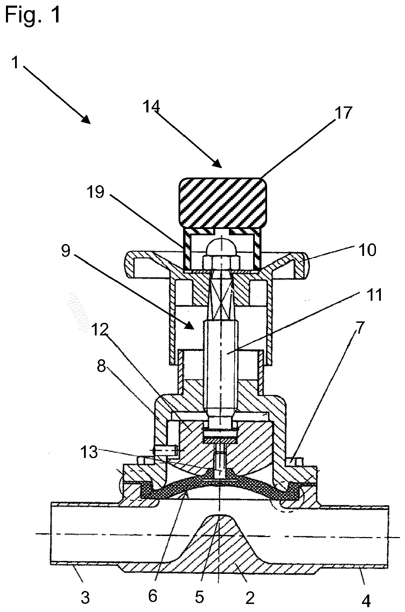

Figur 1 zeigt eine erfindungsgemäße Membranventilanordnung mit einem Membranventil 1, das ein Gehäuseunterteil 2 aufweist, welches Anschlüsse 3, 4 und ein Wehr 5 aufweist. Das Wehr 5 dient als Sitzfläche für die Membran 6. Die Membran 6 ist mithilfe von Schrauben als Verbindungsmitteln 7 eingespannt. Die Membran 6 ist zwischen dem Gehäuseunterteil 2 und einem Gehäuseoberteil 8 eingespannt. Im Gehäuseoberteil 8 sind die zur Betätigung der Membran 6 notwendigen Elemente integriert.

Zur Betätigung der Membran ist eine Sperrvorrichtung 9 vorgesehen, welche einen Antrieb in Form eines Handrades 10 aufweist. Eine Spindel 11 ist an einem Druckstück 12 befestigt. Das Druckstück 12 ist verschieblich im Gehäuseoberteil 8 angeordnet und wird von einer inneren Wand des Gehäuseoberteils 8 geführt. Durch Betätigung des Handrades 10 wird über die Spindel 11 eine horizontale Verschiebung des Druckstücks 12 bewirkt, sodass sich die Membran 6 verformt und der Querschnitt zwischen dem Wehr 5 und der Membran 6 vergrößert bzw. verkleinert werden kann. In die Membran 6 ist ein stiftartiges Element 13 eingebettet, das im Ausführungsbeispiel als Membranschraube ausgebildet ist.

Zur Überwachung des Membranventils 1 ist ferner ein Messsystem 14 vorgesehen, welches über eine Befestigungsplatte 19 oberhalb an dem Handrad 10 befestigt ist. Das Messsystem 14 weist eine Sensorvorrichtung 15 und eine Auswerteeinheit 16 auf, die in einem gemeinsamen Messgehäuse 17 angeordnet sind. Eine Auswerteeinheit 16 kann extern bereitgestellt werden, wobei eine Übertragung der Signale zwischen der Auswerteeinheit 16 und der Ausgabeeinheit 18 über eine drahtlose Signalverbindung 22 und entsprechende drahtlose Verbindungsmittel bereitgestellt wird.

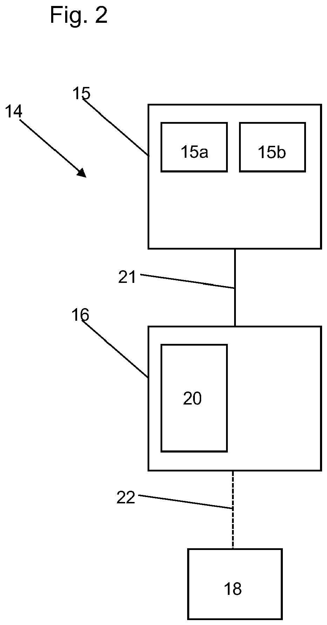

Mit Hilfe des Messsystems 14 kann eine Überwachung des Membranventils 1 insbesondere eine Überwachung der Stellposition der Membran 6 verwirklicht werden, wobei die genaue Ausgestaltung des Messsystems 14 sowie dem damit durchführbaren Verfahren aus einer vergleichenden Betrachtung mit der Figur 2 hervorgeht.

Das Messsystem 14 weist eine Sensorvorrichtung 15 bestehend aus insgesamt zwei Sensoreinheiten 15a, 15b auf. Die Sensoreinheit 15a besteht hierbei aus einem dreiachsigen Gyroskop und einem dreiachsigen Magnetometer. Sensoreinheit 15b weist einen dreiachsigen Beschleunigungssensor als Schwingungssensor auf. Darüber hinaus kann die zweite Sensoreinheit 15b ergänzend oder alternativ ein Mikrofon enthalten.

Die die Ausgestaltung der einzelnen Sensoreinheiten 15a, 15b ist vorliegend an die Anforderungen eine Sperrvorrichtung 9 mit einem Handrad 10 angepasst. Jedoch kann die Erfindung auch bei pneumatisch betriebenen Membranventilen 1 verwendet werden. In diesem Fall würde die erste Sensoreinheit 15a zusätzlich zumindest einen Druck- und/oder Wegsensor aufweisen. Mit Hilfe des Drucksensors kann beispielsweise der Steuerdruck des Pneumatikantriebes erfasst werden. Somit erfolgt mit Hilfe der ersten Sensoreinheit 15a sowohl eine Erfassung der Bewegung der Membran 6 als auch der genauen Stellposition. Dies gilt unabhängig davon, ob die Sperrvorrichtung 9 ein Handrad 10 oder einen Pneumatikantrieb aufweist. Allerdings kann im Falle eines Pneumatikantriebes die Bewegung und die Lage einzig über den Druck- oder den Wegsensor erfolgen. Dennoch ist auch dann weiterhin ein Gyroskop und ein Magnetometer in der ersten Sensorvorrichtung 15a enthalten, da nur mittels dieser Sensoren eine Ausrichtung des Membranventils 1 selbst ermittelt werden kann.

Die mit den Sensoreinheiten 15a,15b ermittelten Signale werden über eine Verbindung 21 z.B. über ein Signalkabel oder eine drahtlose Verbindung an die Auswerteeinheit 16 übertragen, wobei die Auswerteeinheit 16 insbesondere anhand der von dem Gyroskop und dem Magnetometer detektierten Stellposition sicherheits- und/oder prozessrelevante Zustandsinformationen bestimmt und diese Informationen als drahtloses Signal über die Signalverbindung 22 an die Ausgabeeinheit 18 übermittelt. Die Auswerteeinheit 16 weist eine Speichereinheit 20 auf, in der ein Ablaufplan gemäß der Tabelle für den Austausch der Membran 6 hinterlegt ist. Dieser Ablaufplan gilt analog auch für pneumatisch betriebenes Membranventil 1.

| **Schritt** | **Beschreibung** | **Erkennung** |
|---|---|---|
| 0. | Ventil drucklos und entleert | |
| 1. | Fahren in offene Stellposition | Erste Sensoreinheit (15a) |
| 2. | Lösen und Entfernen der Schrauben | Zweite Sensoreinheit (15b) |
| 3. | Antrieb der Stellvorrichtung entfernen | Erste und/oder zweite Sensoreinheit (15a, 15b) |
| 4. | Fahren in geschlossene Stell position | Erste Sensoreinheit (15a) |
| 5. | Alte Membran ausschrauben | Erste und/oder zweite Sensoreinheit (15a, 15b) |
| 6. | Neue Membran einschrauben | Erste und/oder zweite Sensoreinheit (15a, 15b) |
| 7. | Fahren in offene Stellposition | Erste Sensoreinheit (15a) |
| 8. | Antrieb auf Ventilsitz aufsetzen | Erste und/oder zweite Sensoreinheit (15a, 15b) |
| 9. | Schrauben handfest einschrauben | Zweite Sensoreinheit (15b) |
| 10. | Fahren in geschlossene Stell position | Erste Sensoreinheit (15a) |
| 11. | Schrauben festziehen | Erste und zweite Sensoreinheit (15a, 15b) |

Die Erkennung des Verfahrens der Sperrvorrichtung 9 in eine offene oder geschlossene Stellung erfolgt über die erste Sensoreinheit 15a.

Das Lösen und Entfernen der Verbindungsmittel 7 erzeugt eine Schwingung und Schall, der über die zweite Sensoreinheit 15b ermittelt werden kann. Gleich gilt für das Einsetzen und Festziehen der Verbindungsmittel 7.

Beim Entfernen des Handrads 10 erkennt das Gyroskop eine Drehung um eine der Raumachsen und das Magnetometer eine Änderung der Orientierung zum Erdmagnetfeld. Der Beschleunigungssensor kann ferner eine translatorische Bewegung erkennen. Auch Information über die Dauer der Bewegung und der Ablageposition können in die Auswertung einfließen. Diese Informationen sind dann in der Speichereinheit 20 hinterlegt. Auch das Aus- und Einschrauben der Membran 6 kann so detektiert werden, da eine Drehung der Membran auch eine Bewegung des Antriebs bedingt.

Beim Anziehen der Verbindungsmittel 7 auf einer Ecke neigt sich der Antrieb zu dieser Seite. Die Neigung kann mit der ersten Sensoreinheit 15a erkannt werden. Damit ist auch eine Überprüfung möglich, ob die Schrauben über Kreuz, im Urzeigersinn, entgegen dem Urzeigersinn oder zufällig angezogen werden. Da die Neigung einerseits und das Anziehen der Verbindungsmittel 7 andererseits über separate Sensoreinheiten 15a,15b erfasst werden, kann auch eine gleichzeitige Auswertung erfolgen.

## Patentansprüche

1. Verfahren zur Überwachung von Wartungsarbeiten an einem Membranventil (1), wobei eine zumindest eine Sensoreinheit (15a,15b) aufweisende Sensorvorrichtung (15) Betriebsinformationen des Membranventils (1) erfasst und diese an eine Auswerteeinheit (16) übermittelt, wobei die Auswerteeinheit (16) einzelne Wartungsschritte durch einen Abgleich der Betriebsinformationen mit charakteristischen Betriebsinformationen ermittelt und wobei die charakteristischen Betriebsinformationen in einer Speichereinheit (20) der Auswerteeinheit (16) hinterlegt sind.

2. Verfahren nach Anspruch 1, wobei das Membranventil (1) eine Membran (6) aufweist, deren Stellposition über eine Sperrvorrichtung (9) verändert werden kann, und wobei eine erste Sensoreinheit (15a) die Stellposition und/oder die Bewegung der Membran (6) als Betriebsinformation erfasst.

3. Verfahren nach Anspruch 2, **dadurch gekennzeichnet, dass** die erste Sensoreinheit (15a) ein Gyroskop und/oder Magnetometer und/oder einen Beschleunigungssensor aufweist.

4. Verfahren nach Anspruch 3, **dadurch gekennzeichnet, dass** die erste Sensoreinheit (15a) die Stellposition über eine Erfassung der Winkelstellung der Sperrvorrichtung (9) ermittelt, wobei die Sperrvorrichtung (9) als Handrad (10) ausgebildet ist.

5. Verfahren nach Anspruch 3, **dadurch gekennzeichnet, dass** die erste Sensoreinheit (15a) zumindest einen Drucksensor oder einen Wegsensor aufweist, wobei der Drucksensor oder Wegsensor die Stellposition der Sperrvorrichtung (9) ermittelt, wobei die Sperrvorrichtung (9) als Pneumatikantrieb ausgebildet ist.

6. Verfahren nach einem der Ansprüche 1 bis 5, wobei eine zweite Sensoreinheit (15b) Schwingungen des Membranventils (1) als Betriebsinformation erfasst, wobei die zweite Sensoreinheit (15b) zumindest ein Mikrofon und/oder zumindest einen Beschleunigungssensor aufweist.

7. Verfahren nach einem der Ansprüche 1 bis 6, wobei charakteristische Betriebsinformationen in Form eines Ablaufplans in der Speichereinheit (20) hinterlegt sind und einzelne Wartungsschritte sowohl nach Art als auch nach der Reihenfolge der von der Sensorvorrichtung (15) detektierten Betriebsinformationen in der Auswerteeinheit (16) ermittelt werden.

8. Verfahren nach Anspruch 1 bis 7, wobei die Auswerteeinheit ein Ausgabesignal erzeugt und dieses an eine Ausgabeeinheit (18) übermittelt.

9. Verfahren nach Anspruch 8, wobei die Sensorvorrichtung (15) und die Auswerteeinrichtung (16) und/oder die Auswerteeinrichtung (16) und die Ausgabeeinheit (18) über eine drahtlose Verbindung miteinander in Verbindung stehen.

10. Membranventilanordnung mit zumindest einem Membranventil (1) und einem Messsystem (14), wobei das Messsystem (14) zumindest eine Sensorvorrichtung (15) und eine Auswerteeinheit (16) aufweist und wobei das Messsystem (14) zur Durchführung des Verfahrens nach einem der Ansprüche 1 bis 8 ausgebildet und eingerichtet ist.

11. Membranventilanordnung nach Anspruch 10, wobei das Messsystem (14) eine Ausgabeeinheit (18) in Form eines Smartphones, eines Tablets, einer Augmented- oder einer Virtual-Reality-Brille aufweist.
